# EUROPEAN PATENT APPLICATION

(11) **EP 2 735 730 A1**
(43) Date of publication of application: **28.05.2014**
(21) Application number: 12194490.4
(22) Date of filing: 27.11.2012
(51) Int. Cl.: F03B 13/26

(54) **A stabilised hydroelectric turbine system**

(71) Applicant: Openhydro IP Limited, Dublin 2 (IE)
(72) Inventor: Dunne, Paul, Dublin, 9 (IE); Carlisle, Andrew, Belfast, BT8 7YT (GB)
(74) Representative: O'Neill, Brian

(57) **Abstract**

The present invention provides a hydroelectric turbine system (10) including a base (12) on which a hydroelectric turbine (14) is mounted and supported, the base (12) having a number of fixed length legs (20) and at least one adjustable length leg (22), in order to allow all of the legs to contact the seabed in order to evenly distribute the system load into the seabed.

## Description

### Field of the invention

The present invention is concerned with a hydroelectric turbine system, and in particular a stabilised base on which the hydroelectric turbine is mounted, which provides increased stability while reducing the weight and cost of the system but without requiring the use of piling or other complex fixing operations, thus significantly simplifying the installation of such a turbine.

### Background of the invention

Currently, and at a global scale, there is great concern surrounding the damage that the emission of CO2 is causing to our environment, in particular the threat posed by global warming. One of the major sources of CO2 emission is in the production of electricity, on a large scale, through the burning of fossil fuels. Electricity is however a commodity that has become essential to the survival of the human race, and there are thus vast resources currently being expended in seeking alternative means of generating large quantities of electricity without the use of fossil fuel. While nuclear energy is one such alternative, most societies are uncomfortable with the negative aspects of nuclear power and thus other more desirable solutions are required.

Renewable energy has thus come to the fore in recent years, with many projects being developed around solar energy, wind energy, and tidal power. Of these alternative forms of energy, tidal power is arguably the most attractive, given that tidal flows are entirely predictable and constant, unlike wind or solar energy which are relatively intermittent and therefore less dependable.

However, harnessing tidal energy does provide its own challenges, in particular with respect to the installation and maintenance of tidal power generators, for example hydroelectric turbines, which by the very nature of the operation of same must be located in relatively fast flowing tidal currents, and more than likely located on the seabed. These conditions are significantly inhospitable, and are not conducive to safe working conditions. The installation of a base on which such tidal turbines are mounted has conventionally taken the form of the sinking of a pile into the seabed, on which pile a turbine or secondary frame carrying one or more turbines can then be located. However, the sinking of a pile into the seabed in an area of high tidal flow is considerably problematic and generally a dangerous operation. In addition, significant drilling and piling equipment must be transported to and operated at the site of installation, significantly increasing the complexity and cost of the operation.

The installation process is further complicated by an increasing shortage in the market of suitable vessels and equipment to perform such drilling work and the extreme danger of engaging divers in high tidal flow sites.

### Summary of the invention

According to a first aspect of the present invention there is provided a hydroelectric turbine system comprising a base for a hydroelectric turbine, the base comprising at least four legs, wherein the position of at least one leg relative to at least one other leg is variable.

Preferably, the at least one variable position leg is adjustable in length.

Preferably, the length adjustable leg is telescopic.

Preferably, the length of the adjustable leg is remotely controllable.

Preferably, the adjustable leg is hydraulically/pneumatically adjustable in length.

Preferably, the at least four legs are arranged in a substantially rectangular array.

Preferably, the base comprises a frame from which the plurality of legs extend, the frame being quadrilateral.

Preferably, the frame comprises a trapezoid.

Preferably, the frame comprises an isosceles trapezoid.

Preferably, the frame comprises a plurality of cross members, a single cross member extending between adjacent legs.

Preferably, the system comprises a hydroelectric turbine mounted to the base.

Preferably, the system comprises a load sensor operable to measure the load applied between the seabed and at least the variable position leg.

Preferably, the system comprises a controller operable to halt or adjust extension of the leg when a predetermined load is recorded by the load sensor.

Preferably, the frame has sufficient flexibility to permit load induced variation in the position of the at least one variable leg.

According to a second aspect of the present invention there is provided a method of installing a hydroelectric turbine system, the method comprising the steps of:
transporting a base of the system to a deployment site;
lowering the base from the vessel until a plurality of legs on the base contact the seabed; and varying the position of at least one variable position leg until said leg contacts the seabed.

Preferably, the method comprises extending or retracting the variable position leg.

Preferably, the method comprises remotely actuating the extension or retraction of the position variable leg.

Preferably, the at least one position variable leg is adjusted in length until a predetermined load is applied between the seabed and the position variable leg.

Preferably, the method comprises the step of establishing the suitability of the seabed at the deployment site prior to extending the at least one position variable leg.

Preferably, the method comprises establishing that the attitude of the base, when lowered on to the seabed, is within a predetermined range prior to extending the at least one position variable leg.

### Brief description of the drawings

The present invention will now be described with reference to the accompanying drawings, in which;
Figure 1 illustrates a perspective view of a hydroelectric turbine system according to the present invention;
Figure 2 illustrates a base of the hydroelectric turbine system illustrated in Figure 1; and
Figure 3 illustrates an alternative base having a trapezoid shape in plan in order to simplify lowering from a deployment vessel.

### Detailed description of the drawings

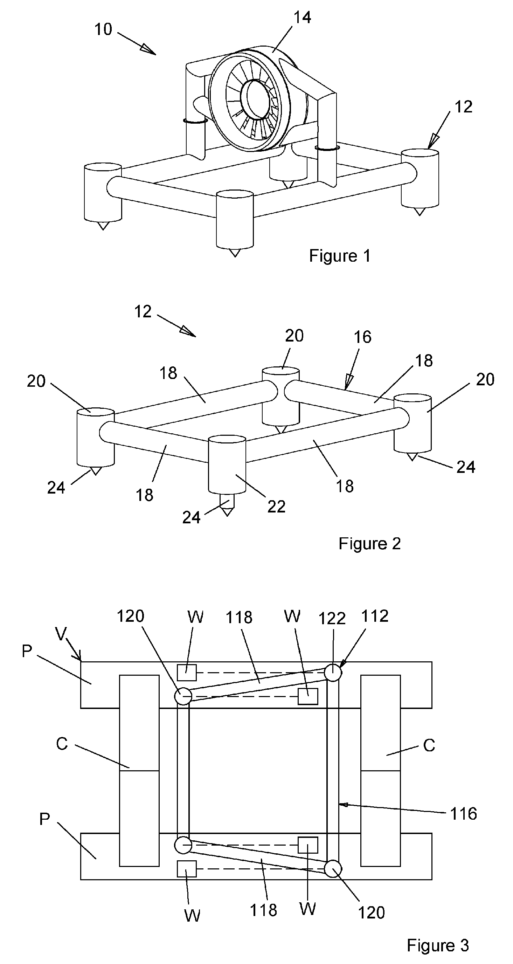

Referring now to Figures 1 and 2 of the accompanying drawings there is illustrated a hydroelectric turbine system, generally indicated as 10, which in use is deployed on the seabed or other suitable underwater support surface or location, in order to generate electrical energy from the tidal flow of water past the system 10, for example through the use of a magnet (not shown) and coil (not shown) type generator, an induction type generator, or any other suitable generator incorporated into the system 10 in known fashion.

The hydroelectric turbine system 10 comprises a base 12 on which a hydroelectric turbine 14 is mounted, the base 12 providing support and stability to the hydroelectric turbine 14 when deployed on the seabed. Water flow through the turbine 14 causes rotation of the turbine 14, which rotation is then converted into electrical energy via the above mentioned generator (not shown). The base 12 and turbine 14 experience significant forces, during use, resulting from the high velocity tidal flow of water, and thus stability of the system 10 is of utmost importance.

In the embodiment illustrated the base 12 comprises a frame 16 which is substantially quadrilateral in shape, and is formed from four cross members 18 formed from tubular steel, although it will be appreciated that any other suitable material may be employed. The cross members 18 are connected to and extend between three fixed legs 20 and a variable position or adjustable leg 22, the legs 20, 22 being disposed, in the embodiment illustrated, in a rectangular array. The legs 20, 22 are formed, in the embodiment shown, by large sections of tubular steel which may or may not be hollow and/or filled with ballast, although it will again be appreciated that the shape, orientation and material of the legs 20, 22 maybe varied as required. Each of the legs 20, 22 terminate in a ground contacting foot 24 which is preferably tapered or pointed towards a free end thereof, but may be of pad form, in order to engage and penetrate seabed rock, cobbles (large pebbles) or other seabed types, when the system 10 is deployed on the seabed, in order to prevent the system 10 from being slidably displaced along the seabed under the influence of tidal forces. However any other suitable form of foot or termination may be employed if desired. It should also be understood that the number of fixed legs 20 and adjustable legs 22 may be varied as required.

While the fixed legs 20 may be solid or hollow and filled with ballast, the adjustable leg 22 is preferably hollow in order to accommodate an actuator (not shown) adapted to adjust the, in use, vertical length of the leg 22 for the reasons set out herein after. The actuator (not shown) could of course be placed in an alternative location, for example remotely of the leg 22 or the entire base 12, once the desired functionality can be performed. In the preferred embodiment illustrated the actuator is adapted to displace the foot 24 relative to the tubular portion of the leg 22, in order to effectively adjust the overall length of the leg 22. The actuator (not shown) may be of any suitable form, for example one or more hydraulic/pneumatic cylinders, a mechanically based actuator such as a rack and pinion type arrangement, or any other suitable functional alternative.

The actuator (not shown) is also preferably remotely controllable, in order to allow the leg 22 to be adjusted in length from a remote location such as a deployment vessel (not shown) used in lowering the system 10 to the seabed. This will therefore eliminate the requirement for divers to be present on the seabed at the deployment location.

Thus in use the base 12, preferably with the turbine 14 mounted thereto, is lowered to the deployment site on the seabed by a suitable deployment vessel (not shown). The provision of the four legs 20, 22 is advantageous in lowering and raising the system 10, as each leg 20, 22 provides a convenient connection point at which winch-wound lowering lines (not shown) can be connected to the base 12, thus more evenly distributing the load on the deployment vessel (not shown), for example relative to a triangular or other non-symmetric base.

Prior to lowering of the system 10 towards the seabed, or at least before the base 12 contacts the seabed, it is preferable that the adjustable leg 22 is shortened in length relative to the three fixed legs 20, in order to allow the three fixed legs 20 to each contact the seabed regardless of surface irregularities or unevenness in the seabed. Once the three fixed legs 20 have engaged the seabed, the adjustable leg 22 can then be remotely actuated in order to extend in length and thus force the respective foot 24 into contact with the seabed. Suitable pressure may then be applied by the actuator (not shown) in order to ensure that the adjustable leg 22 is carrying the desired share of the load generated by the system 10. At this point the system 10 is stably located on the seabed, and the turbine 14 can then be put into operation.

In a preferred arrangement the suitability of the seabed at the deployment site may be established prior to extending the length adjustable leg 22. For example the system 10 may be provided with one or more sensors (not shown) which are adapted to measure the attitude of the system 10, which information may then be used to determine whether or not the leg 22 should be extended. The sensors (not shown) may be provided at any suitable location, for example on the frame 12 or remotely thereof. For example it is desirable that the base 12 is substantially horizontally oriented before the leg 22 is extended. In order to achieve a horizontal orientation the three fixed legs 20 would need to contact points on the seabed at approximately the same depth, such that the base 12 is substantially level or horizontal before the leg 22 is extended, as the leg 22 will not be capable of compensating or adjusting the overall level of the base 12.

It is also envisaged that the system 10 may comprise a load sensor (not shown) operable to determine the load being applied between the length adjustable leg 22 and the seabed, as the leg 22 is extended and contacts the seabed. In this way extension of the leg 22 can be halted once a predetermined load has been reached, which is preferably when the leg 22 is bearing approximately the same load as each of the three fixed legs. Additional extension of the leg 22 at this stage could result is one of the fixed legs being raised off the seabed. The system 10 may therefore be provided with a controller operable to automatically halt extension of the leg 22 when this condition is reached.

As mentioned above, the shape and configuration of the base 12 may be varied as required, and the number of fixed legs 20 may be altered as required. However, the provision of three fixed legs 20 and a fourth adjustable leg 22 in a rectangular array provides a number of advantages. The use of four legs provides a very stable platform on which to support the turbine 14, while simultaneously allowing a lighter overall base 12 to be used, as the loads experienced both during deployment and recovery, and operation on the seabed, are more evenly distributed, allowing the cross members 18 to be formed from a lighter gauge material, while also lowering the loads on the deployment vessel during deployment and retrieval of the system 10. This will both reduce the cost of manufacturing the system 10, in addition to reducing the cost and complexity of transporting the system 10.

It is however envisaged that the system 10 of the present invention could be provided with more than one length adjustable leg 22. In addition, the system 10 may be designed such that the length adjustable legs are adapted, whether through manual or automatic control, to compress or shorten in length if subjected to higher than the intended loading, thereby spreading the load more evenly to the remaining legs 20, 22.

It is also envisaged that the variability of the position of one or more of the legs 20, 22 could be achieved through alternative means. For example by designing the frame 16 to have sufficient flexibility, it is possible to allow one or more of the legs 20, 22 to be displaced under load, for example the dead load of the base 12 or the combined load of the base 12 and turbine 14, such that the frame 12 flexes to allow all of the legs 20, 22 to contact the seabed or other underwater support surface, thereby evenly distributing the load across all of the legs 20, 22 in spite of an uneven surface on which the legs 20, 22 are located.

Referring now to Figure 3 there is illustrated an alternative embodiment of a base forming part of a hydroelectric turbine system of the present invention, and generally indicated as 112. In this alternative embodiment like components have been accorded like reference numerals and unless otherwise stated perform a like function. The base 112 comprises a frame 116 which is again quadrilateral in form, in particular in plan view, each side being defined by a cross member 118. The base 112 is shown mounted beneath a deployment vessel V, which comprises a pair of substantially parallel pontoons P secured to one another by a pair of parallel and spaced apart cross beams C. In use the base 112 is secured beneath the pair of pontoons P and suitably secured in position for transport to a deployment site, before being lowered away from the underneath of the vessel V, in this case by a plurality of winches W located on the deck of the pontoons P. The base 112 comprises four legs, one located at each apex of the frame 116. The base 112 comprises three fixed legs 120 and a single position adjustable leg 122. It should be noted that for the purposes of describing this embodiment of the base 112, the position of the adjustable leg 122 is immaterial, and is shown at the particular location for illustrative purposes only.

Each of the winches W is secured via a suitable line to one of the legs 120, 122 and during deployment each of the winches W feeds out line in order to lower the base 112 in a controlled fashion from directly beneath the deployment vessel V. By providing the frame 116 as a trapezoid shape, preferably an isosceles trapezoid, two of the legs 120 are stepped inwardly relative to the remaining legs 120, 122, in this case the pair of legs 120 shown on the left hand side of Figure 3. This arrangement allows the pair of winches W on each pontoon P to be offset relative to one another and a longitudinal axis of the pontoon P, such that a line from each winch W has an unobstructed path to the respective leg 120, 122 without the lines from each winch W having to cross one another on the deck of the pontoon P. This ensures a simplified layout on the vessel V, thereby simplifying the deployment process.

It will thus be appreciated that the system 10 of the present invention allows a hydroelectric turbine 14 to be located and supported on the seabed even where the surface is uneven, and to provide a stable platform during operation of the turbine 14. In addition, the risk of overturning, relative to a non-symmetric base configuration, is significantly reduced, as is the risk of sliding displacement on the seabed due to the increased number of seabed contacting feet 24, in particular relative to a triangular or three-legged base.

## Claims

1. A hydroelectric turbine system comprising a base for a hydroelectric turbine, the base comprising at least four legs, wherein the position of at least one leg relative to at least one other leg is variable.

2. A hydroelectric turbine system according to claim 1 in which the at least one variable position leg is adjustable in length.

3. A hydroelectric turbine system according to claim 2 in which the length adjustable leg is telescopic.

4. A hydroelectric turbine system according to any preceding claim in which the at least four legs are arranged in a substantially rectangular array.

5. A hydroelectric turbine system according to any preceding claim in which the base comprises a frame from which the plurality of legs extend, the frame being quadrilateral.

6. A hydroelectric turbine system according to claim 5 in which the frame comprises a trapezoid.

7. A hydroelectric turbine system according to claim 5 in which the frame comprises an isosceles trapezoid.

8. A hydroelectric turbine system according to any preceding claim comprising a hydroelectric turbine mounted to the base.

9. A hydroelectric turbine system according to any preceding claim comprising a load sensor operable to measure the load applied between the seabed and at least the variable position leg.

10. A hydroelectric turbine system according to claim 9 comprising a controller operable to halt or adjust extension of the leg when a predetermined load is recorded by the load sensor.

11. A hydroelectric turbine system according to any of claims 5 to 10 in which the frame has sufficient flexibility to permit load induced variation in the position of the at least one variable leg.

12. A method of installing a hydroelectric turbine system, the method comprising the steps of:
transporting a base of the system to a deployment site;
lowering the base from the vessel until a plurality of legs on the base contact the seabed; and
varying the position of at least one variable position leg until said leg contacts the seabed.

13. A method according to claim 12 comprising extending or retracting the variable position leg.

14. A method according to claim 13 comprising remotely actuating the extension or retraction of the position variable leg.

15. A method according to claim 13 or 14 in which the at least one position variable leg is adjusted in length until a predetermined load is applied between the seabed and the position variable leg.
